# EUROPEAN PATENT SPECIFICATION

(11) **EP 3 257 166 B1**
(45) Date of publication and mention of the grant of the patent: **25.04.2018**
(21) Application number: 16705847.8
(22) Date of filing: 22.01.2016
(51) Int. Cl.: H04B 7/04, H04W 36/00

(54) **RADIO NETWORK NODE, USER EQUIPMENT AND METHODS FOR HANDOVER**
FUNKNETZWERKKNOTEN, BENUTZERGERÄT UND VERFAHREN ZUR ÜBERGABE
NOEUD DE RÉSEAU RADIO, ÉQUIPEMENT UTILISATEUR ET PROCÉDÉS DE TRANSFERT DE COMMUNICATION

(30) Priority: 09.02.2015 US 201562113823 P
(43) Date of publication of application: 20.12.2017
(73) Proprietor: Telefonaktiebolaget LM Ericsson (publ), 164 83 Stockholm (SE)
(72) Inventor: SHI, Nianshan, 176 74 Järfälla (SE); NAMMI, Sairamesh, 07921 Bedminster (US); LIDIAN, Namir, 171 49 Solna (SE); GÖRANSSON, Bo, 191 38 Sollentuna (SE)
(74) Representative: Zacco Sweden AB
(86) International application number: PCT/SE2016/050043
(87) International publication number: WO 2016/130065

(56) References cited:
- WO-A2-2014/027947
- WO-A2-2014/027949
- US-A1- 2012 328 031
- MOTOROLA: "Antenna Configuration Information Element", 3GPP DRAFT; R2-084204, 3RD GENERATION PARTNERSHIP PROJECT (3GPP), MOBILE COMPETENCE CENTRE, no. Jeju; 20080812, 12 August 2008 (2008-08-12), XP050319330,

## Description

### TECHNICAL FIELD

Embodiments herein relate to a radio network node, wireless device and methods therein. In particular, the embodiments herein relate to handling of handover.

### BACKGROUND

Wireless devices are also known as e.g. communication devices, User Equipments (UE), mobile terminals, wireless terminals and/or mobile stations. Wireless devices are enabled to communicate wirelessly in a cellular communications network or wireless communication system, sometimes also referred to as a cellular radio system or a cellular network. The communication may be performed e.g. between two wireless devices, between a wireless device and a regular telephone and/or between a wireless devices and a server via a Radio Access Network (RAN) and possibly one or more core networks, comprised in the cellular communications network. Wireless devices may further be referred to as mobile telephones, cellular telephones, computers, or tablets with wireless capability, just to mention some further examples. Wireless devices may also be, for example, portable, pocket-storable, hand-held, computer-comprised, or vehicle-mounted mobile devices, enabled to communicate voice and/or data, via the RAN, with another entity, such as another wireless devices or a server.

The cellular communications network covers a geographical area which is divided into cell areas, wherein each cell area is served by a base station, e.g. a Radio Base Station (RBS), which may also be referred to as e.g. "eNB", "eNodeB", "NodeB", "B node", or BTS (Base Transceiver Station), depending on the technology and terminology used. The base station may be of a particular class, such as macro eNodeB, home eNodeB or pico base station, based on transmission power and thereby also based on cell size. A cell is the geographical area where radio coverage is provided by the base station at a base station site. One base station, situated on the base station site, may serve one or several cells. The cells are often overlapping. Furthermore, each base station may support one or several communication technologies. The base stations communicate over the air interface, also referred to as the cellular interface, operating on radio frequencies with the wireless devices within range of the base stations. In 3rd Generation Partnership Project (3GPP) Long Term Evolution (LTE), base stations, which may be referred to as eNodeBs or even eNBs, may be directly connected to one or more core networks. 3GPP LTE radio access standard has been drafted in order to support high bitrates and low latency both for uplink and downlink traffic. All data transmission in LTE is controlled by the base station. Background art is represented by the patent publications US2012/328031 and WO2014/027947.

### Downlink Enhancements in High-Speed Packet Access (HSPA)/LTE

In 3GPP Rel 13, a Study Item RP-141657 "Study on Downlink Enhancements for UMTS" has been approved. The main objective of this study item is to improve the downlink signaling performance on overload and latency, especially for the case of Radio Resource Control (RRC) state transition and parameter updating. Note that codebook subset restriction bitmap (also called Precoding weight set restriction) is sent using RRC signaling in the current system from Radio Network Controller (RNC) to the UE. It is also sent from the Node B to the RNC.

### MIMO Background

The Multiple Input Multiple Output (MIMO) technique, is an advanced antenna technique to improve the spectral efficiency and thereby boosting the overall system capacity. The MIMO technique uses a commonly known notation (M x N) to represent MIMO configuration in terms number of transmit (M) and receive (N) antennas. The common MIMO configurations used or currently standardized for various technologies are: (2 x 1), (1 x 2), (2 x 2), (4 x 2), (4 x 4), (8 x 2), (8x4) and (8 x 8). The configurations represented by (2 x 1) and (1 x 2) are special cases of MIMO and they correspond to transmit diversity and receiver diversity respectively.

Multiple antennas employed at the transmitter and receiver can significantly increase the system capacity. By transmitting independent symbol streams in the same frequency bandwidth, usually termed as spatial multiplexing (SM) achieves a linear increase in data rates with the increased number of antennas. On the other hand, by using space-time codes at the transmitter, reliability of the detected symbols can be improved by exploiting the so called transmit diversity. Both these schemes assume no channel knowledge at the transmitter. However, in a practical wireless systems, such as the 3GPP LTE, High Speed Downlink Packet Access (HSDPA) and WiMAX systems, the channel knowledge can be made available at the transmitter via feedback from the receiver to the transmitter. The MIMO transmitter can utilize this channel information to improve the system performance with the aid of precoding. In addition to beam forming gain, the use of precoding avoids the problem of ill-conditioned channel matrix.

In practice, complete Channel State Information (CSI) may be available for a communication system using the Time Division Duplex (TDD) scheme by exploiting channel reciprocity. However, for a Frequency Division Duplex (FDD) system, complete CSI is more difficult to obtain. In a FDD system, some kind of CSI knowledge may be available at the transmitter via feedback from the receiver. These systems are called limited feedback systems. There are many implementations of limited feedback systems such as codebook based feedback, quantized channel feedback. 3GPP LTE, HSDPA and WiMax recommend codebook based feedback CSI for precoding. Examples of CSI are Channel Quality Indicator (CQI), Precoding Index (PCI), Precoding Matrix Indicator (PMI), Rank Indicator (RI). One or combination of different types of CSI is used by the network node, e.g. Node B in UMTS Terrestrial Radio Access (UTRA) or eNode B in LTE, for one or more resource assignment related tasks such as scheduling data to UE, rank adaptation of MIMO streams, precoder selection for MIMO stream etc. UMTS is short for Universal Mobile Telecommunications System.

In codebook based precoding, a predefined codebook is defined at both the transmitter and receiver. The entries of a codebook can be constructed using different methods. For example Grassmannian, Llyod algorithm, Discrete Fourier Transform (DFT) matrix etc. The precoder matrix is often chosen to match the characteristics of the NRxNT MIMO channel matrix H, resulting in so-called channel dependent precoding. This is also commonly referred to as closed-loop precoding and essentially strives for focusing the transmit energy into a subspace which is strong in the sense of conveying much of the transmitted energy to the UE. In addition, the precoder matrix may also be selected to strive for orthogonalizing the channel, meaning that after proper linear equalization at the UE, the inter-layer interference is reduced. At the receiver it is common to find the Signal-to-Interference-and-Noise-Ratio (SINR) with different codebook entries and choose the Rank/precoding index which gives highest spectral efficiency (capacity).

However, the network can choose to use only a limited number of the available precoding elements for variety of reasons. This limited set then needs to be indicated to the UE. This is referred to as codebook subset restriction or also known as precoding weight restriction.

### Overview of Codebook Subset Restriction

According to 3GPP standard Technical Specification (TS) 36.213/25.214, a UE is restricted to report PMI/PCI and RI/Number of Transport Blocks Preferred (NTBP) within a precoder codebook subset specified by a bitmap parameter *codebookSubsetRestriction* configured by higher layer signalling. For a specific precoder codebook and associated transmission mode, the bitmap can specify all possible precoder codebook subsets from which the UE should assume the eNB may be using when the UE is configured in the relevant transmission mode. Codebook subset restriction is supported for open-loop spatial multiplexing, closed-loop spatial multiplexing, multi-user MIMO and closed-loop Rank=1 precoding. The resulting number of bits for each transmission mode is given in Table 1. The bitmap forms the bit sequence *a*_{*A*_{c}-1},...,*a*₃,*a*₂,*a*₁,*a*₀ where *a*₀ is the Least Significant Bit (LSB) and *a*_{*A_{c}*-1} is the Most Significant Bit (MSB) and where a bit value of zero indicates that the PMI and RI reporting is not allowed to correspond to precoder(s) associated with the bit. The associations of bits to precoders for the relevant transmission modes are given as follows:

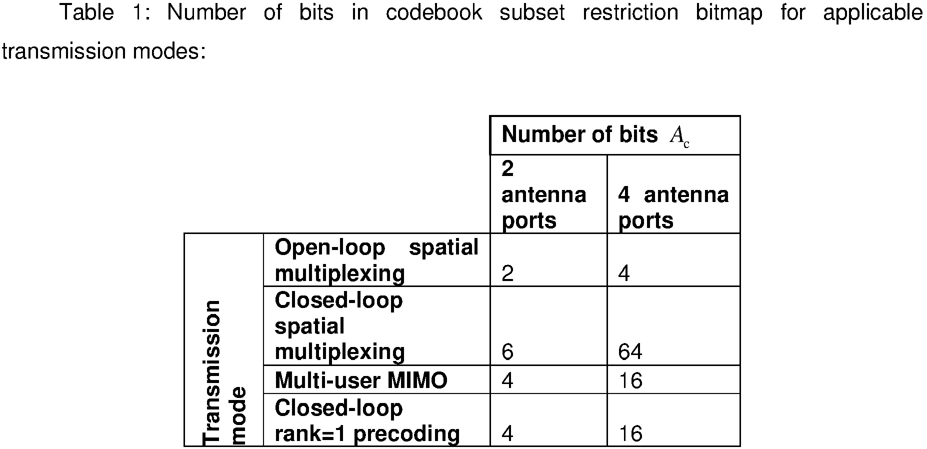

**In HSPA:** According to 3GPP standard TS 25.214, a UE is restricted to report precoding control index (PCI), and NTBP within a precoder codebook subset specified by a bitmap parameter *PrecodingWeightRestriction* configured by higher layer signalling. The bitmap can specify all possible precoder codebook subsets from which the UE should assume the Node B may be using when the UE is configured in MIMO mode. The bitmap forms the bit sequence *a*₆₃ ,...*a*₃,*a*₂,*a*₁,*a*₀ where *a*₀ is the LSB and *a*₆₃ is the MSB and where a bit value of zero indicates that the precoding indices reporting is not allowed in the NTBP/PCI/CQI report. Note that similar procedure is used for 2 transmit (Tx) antennas.

In the current wireless systems, the network, eNode B in the case of LTE, Node B/RNC in the case of HSPA, sends the codebook subset restriction bitmap (complete) when the UE is switched on using RRC signalling. The network has an option to change the bitmap when it is connected to the same cell. However, when the UE moves away from the serving node, the intended node needs to send the codebook subset restriction bitmap corresponding to the other node. For example take the case of 4 antennas. The standard defines a bitmap of length 64 bits. Hence whenever the UE moves to a different cell, the network needs to send this 64 bitmap corresponding to the other cell. This involves large payload there by reducing the data throughput of the current wireless systems.

### SUMMARY

It is therefore an object of embodiments herein to increase the performance in a wireless communications network.

According to a first aspect of some embodiments herein, the object is achieved by a method performed by a radio network node, for assisting in a handover of a user equipment from a first cell to second cell, according to claim 1. The radio network node sends an indication to the user equipment, which indication indicates whether or not to use a same first codebook subset restriction bitmap in the second cell as in the first cell.

According to a second aspect of embodiments herein, the object is achieved by a method performed by a user equipment, for handling a handover of the user equipment from a first cell to a second cell, according to claim 5. The user equipment receives an indication from a radio network node, which indication indicates whether or not to use a same first codebook subset restriction bitmap in the second cell as in the first cell.

According to a third aspect of embodiments herein, the object is achieved by a radio network node, for assisting in a handover of a user equipment from a first cell to a second cell, according to claim 9. The radio network node is configured to send an indication to the user equipment, which indication indicates whether or not to use a same first codebook subset restriction bitmap in the second cell as in the first cell.

According to a forth aspect of embodiments herein, the object is achieved by a user equipment for handling a handover of the user equipment from a first cell to a second cell, according to claim 13. The user equipment is configured to receive an indication from a radio network node, which indication indicates whether or not to use a same first codebook subset restriction bitmap in the second cell as in the first cell.

An advantage with particular embodiments herein is that they provide reduced signaling overhead from the upper layers, such as RRC, thereby improving the throughput of data traffic channel due to the less overhead for the RRC signaling. Certain embodiments may also provide reduced RRC signaling message failures and also reduce the latency. Some embodiments may provide reduced the signaling over lub/lur.

### BRIEF DESCRIPTION OF THE DRAWINGS

Examples of embodiments herein are described in more detail with reference to attached drawings in which:
Figure 1 is a schematic block diagram illustrating a wireless communications network,
Figure 2 is a flowchart depicting embodiments of a method in a radio network node,
Figure 3 is a flowchart depicting embodiments of a method in a user equipment,
Figure 4 is a sequence diagram illustrating a embodiments of a method,
Figure 5 is a schematic block diagram illustrating embodiments of a radio network node, and
Figure 6 is a schematic block diagram illustrating embodiments of a user equipment.

### DETAILED DESCRIPTION

Embodiments herein provide methods to reduce the signalling overhead when a UE moves to a different cell, i.e. another cell than the one it is camping on. Instead of sending the codebook subset restriction bitmap, the network sends an indication implicitly or explicitly such as e.g. a new information element, for example called a codebook subset restriction confirmation bit. As explained below, the indication may in some examples be that an absence of codebook subset restriction bitmaps. When this bit is set to 1 or is set to any other agreed sign, the UE should use the same codebook subset restriction bitmap as that of the previous (old) node or cell. Note that the terms node and cell are used interchangeably herein. By adding this information element, the RRC signalling overhead is reduced when the UE moves to a different cell. This feature is extremely useful when the UE moves to different cell frequently. For example when many low power nodes are deployed within the macro cell coverage area such as e.g. heterogeneous network. Embodiments herein may be extend to lub/lur interface, where the codebook subset restriction bitmap (Precoding weight set restriction) is communicated between RNC and Node B, to save the lub/lur signaling. The dedicated Radio Link Setup/Addition/Reconfiguration response messages from the Node B and the Radio Link Parameter Update. Instead of sending the whole precoding weight set restriction, the Node B sends an indication to indicate that the earlier sent bitmap should be used. In case of multi carrier, the secondary carrier can use the indication to indicate that the same bitmap defined in the primary carrier should be used.

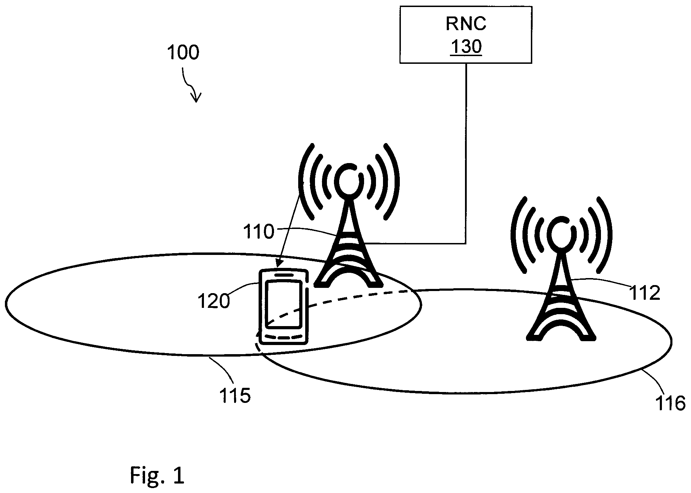

**Figure 1** depicts a **wireless communications network 100** also referred to as a communications system, in which embodiments herein may be implemented. The wireless communications network 100 may e.g. be an LTE, a Wideband Code Division Multiple Access (WCDMA)/HSPA, a Global System for mobile communications (GSM) network, any 3GPP cellular network, a Wimax, or any cellular network or system. Embodiments herein are described in particular for MIMO operation E-UTRA/LTE/LTE-A, UTRA/HSPA FDD systems. The embodiments are however applicable to any Radio Access Technology (RAT) or multi-RAT system where the UE operates using MIMO e.g. LTE TDD, GSM/ GSM EDGE Radio Access Network (GERAN), Wi Fi, Wireless Local Area Network (WLAN), WiMax, CDMA2000, LTE-NX, Massive MIMO systems etc. EDGE is short for Enhanced Data Rates for GSM Evolution.

The wireless communications network 100 comprises a plurality of network nodes whereof two, a **radio network node 110** and a **second radio network node 112** are depicted in Figure 1. The radio network node 110 serves a cell 115, and the second radio network node 112 serves a second cell 116. The network node 110 is a network node which may be for example a nodeB, an eNB, an eNodeB, or an Home Node B, an Home eNode B or any other network node capable to serve a wireless terminal in a wireless communications network 100.

In some embodiments the non-limiting term radio network node 110 or simply network node is used and it refers to any type of network node serving UE and/or connected to other network node or network element or any radio node from where UE receives signal. Examples of radio network nodes are Node B, base station (BS), multi-standard radio (MSR) radio node such as MSR BS, eNode B, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in Distributed Antenna System (DAS) etc..

One or more user equipments operate in the wireless communications network 100, whereof a **user equipment 120** is depicted in Figure 1. The user equipment 120 may be a wireless device, a mobile wireless terminal, a mobile phone, a computer such as e.g. a laptop, or a tablet computer, sometimes referred to as a surf plates, with wireless capabilities, or any other radio network units capable to communicate over a radio link in a cellular communications network 100. The user equipment 120 which may be moving is served by the first cell, but is about to make an handover to be served by the second cell 116.

In some embodiments the non-limiting term User Equipment (UE) is used and it refers to any type of wireless device communicating with a radio network node in a cellular or mobile communication system. Examples of UE are target device, device to device (D2D) UE, machine type UE or UE capable of machine to machine (M2M) communication, Personal Digital Assistant (PDA), iPad, Tablet, mobile terminals, smart phone, laptop embedded equipped (LEE), laptop mounted equipment (LME), Universal Serial Bus (USB) dongles etc. Note that while the focus herein is on 4x4 and 2x2 MIMO systems, it is equally applicable for any Nt TX systems.

The wireless communications network 100 may further comprise an RNC 130. In some embodiments, the radio network node 110 is the RNC 130. The embodiments are applicable to single carrier as well as to multicarrier (MC) or Carrier Aggregation (CA) operation of the UE in conjunction with MIMO in which the UE is able to receive and/or transmit data to more than one serving cells using MIMO. The CA is also called, e.g. interchangeably called, "multi-carrier system", "multi-cell operation", "multi-carrier operation", "multi-carrier" transmission and/or reception.

Please note that in embodiments herein, the term precoding weight restriction and codebook subset restriction are used interchangeably. The description herein also focus on wireless transmissions in the downlink, but the invention is equally applicable in the uplink.

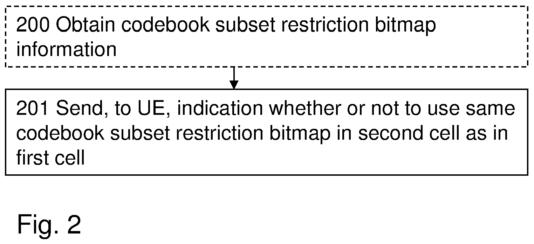

Example embodiments of a method performed by a radio network node 110, for assisting in a handover of a user equipment 120 from a first cell 115 to second cell 116, will now be described with reference to a flowchart depicted in **Figure 2****.**

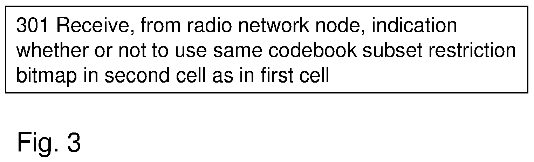

In an example scenario, the user equipment 120 camping on the first cell 115, is moving towards the second cell 116, and needs to make a handover from the first cell 115 to the second cell 116. The method comprises the following actions, which actions may be taken in any suitable order. Dashed lines of one box in Figure 3 indicate that this action may be applicable to particular embodiments, but not necessarily all embodiments.

In the text herein it is sometimes said first cell or previous cell or old cell, all mean same. Also in case of second cell or new cell, they mean same.

### Action 200

The network node 110 finds out that the user equipment 120 is about to make a handover from the first cell 115 to the second cell 116. The user equipment 120 uses a first codebook subset restriction bitmap in the first cell 115. The network node 110 needs to inform the user equipment 120 whether or not it can use the same first codebook subset restriction bitmap in the second cell 116 as in the first cell 115. The user equipment 110 therefore obtains information from the network node about whether or not the user equipment 120 can use the same first codebook subset restriction bitmap in the second cell 116 as in the first cell 115. In this embodiment, it is the network that informs the user equipment 120 about handover since handover is controlled by the network in this scenario.

The network knows what precoder restriction that each node e.g. base station, uses, hence when a handover is prepared the network, e.g. RNC in WCDMA/HSPA, knows if the "new" cell such as the second cell 116 has the same restriction as the cell the user equipment 120 is leaving, such as the first cell 115. Similarly the network may have information about the user equipment 120 capabilities that would impact what restriction to apply for this particular user equipment 120. E.g. there are different restrictions for different user equipments. It might be so that certain user equipment categories/capabilities would benefit from one codebook subset restriction while another is better for other categories.

### Action 201

The network node 110 sends an indication to the user equipment 120, which indication indicates whether or not to use a same first codebook subset restriction bitmap in the second cell 116 as in the first cell 115.

In some embodiments, the indication is a bit related to codebook subset restriction bitmaps, such as a single, bit comprised in a message.

In some embodiments, the indication is a bit related to codebook subset restriction bitmaps, such as a single bit which is comprised in an Information Element, IE.

In some embodiments, the indication comprises that when no bit related to codebook subset restriction bitmaps is comprised in a message; this indicates that the first codebook subset restriction bitmap used in the first cell 115 shall be used in the second cell 116. Expressed differently, the indication may be free of the single bit, wherein an absence of the single bit indicates that the first codebook subset restriction bitmap used in the first cell 115 shall be used in the second cell 116.

In some embodiments, the indication comprises a second codebook subset restriction bitmap, which second codebook subset restriction bitmap is different from the codebook subset restriction bitmap used in the first cell 115, which second codebook subset restriction bitmap indicates that the first codebook subset restriction bitmap used in the first cell 115 shall not be used in the second cell 116.

In some embodiments, the indication comprises that no second codebook subset restriction bitmap being different from the codebook subset restriction bitmap is sent to the user equipment 120, and wherein said indication indicates that the first codebook subset restriction bitmap used in the first cell 115 shall be used in the second cell 116. Expressed differently, the indication may be free of a second codebook subset restriction bitmap, wherein an absence of the second codebook subset restriction bitmap indicates that the first codebook subset restriction bitmap used in the first cell 115 shall be used in the second cell 116.

Example embodiments of a method performed by a user equipment 120 for handling a handover of the user equipment 120 from a first cell 115 to second cell 116, will now be described with reference to a flowchart depicted in **Figure 3****.** In an example scenario, the user equipment 120 camping on the first cell 115, is moving towards the second cell 116, and needs to make a handover from the first cell 115 to the second cell 116. The method comprises the following action.

### Action 301

The user equipment 120 receives an indication from a radio network node 110, which indication indicates whether or not to use a same first codebook subset restriction bitmap in the second cell 116 as in the first cell 115.

In some embodiments, the indication is a bit related to codebook subset restriction bitmaps, such as a single, bit comprised in a message.

In some embodiments, the indication is a bit related to codebook subset restriction bitmaps, such as a single bit which is comprised in an Information Element, IE.

In some embodiments, the indication comprises that when no bit related to codebook subset restriction bitmaps is comprised in a message, this indicates that the first codebook subset restriction bitmap used in the first cell 115 shall be used in the second cell 116. Expressed differently, the indication may be free of the single bit, wherein an absence of the single bit indicates that the first codebook subset restriction bitmap used in the first cell 115 shall be used in the second cell 116.

In some embodiments, the indication comprises a second codebook subset restriction bitmap, which second codebook subset restriction bitmap is different from the codebook subset restriction bitmap used in the first cell 115, which second codebook subset restriction bitmap indicates that the first codebook subset restriction bitmap used in the first cell 115 shall not be used in the second cell 116.

In some embodiments, the indication comprises that no second codebook subset restriction bitmap being different from the codebook subset restriction bitmap is sent to the user equipment 120, and wherein said indication indicates that the first codebook subset restriction bitmap used in the first cell 115 shall be used in the second cell 116. Expressed differently, the indication may be free of a second codebook subset restriction bitmap, which e.g. may be different from the first codebook subset restriction bitmap, wherein an absence of the different second codebook subset restriction bitmap indicates that the first codebook subset restriction bitmap used in the first cell 115 shall be used in the second cell 116.

Embodiment's herein will now be described more in detail. The text below is applicable to and may be combined with any suitable embodiment described above. Embodiments herein may use the knowledge that, in general the nodes belonging to the same carrier, RNC or same vendor uses the same precoding weight restriction bitmap. In these cases, instead of sending the bitmap frequently, a single bit will be used to indicate to the UE whether or not to use the same codebook subset restriction bitmap in the second cell 116 as that of the previous cell, i.e. the first cell 115.

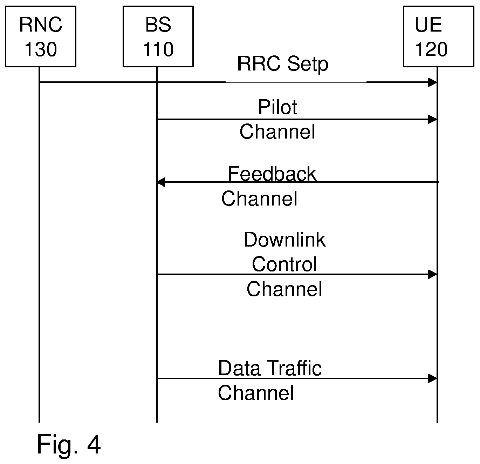

**Figure 4** shows the message sequence chart of an example embodiment of the method. The radio network node 110 such as a base station, the RNC 130 or the network send the information such as the indication related to codebook subset restriction bitmaps using **RRC setup.** For example the indication whether or not to use a same first codebook subset restriction bitmap in the second cell 116 as in the first cell 115 may be sent by using the RRC signalling which may be part of the active set update message, cell update confirm or any reconfiguration message. The type of information will be explained below.

Once the user equipment 120 receives and decodes this information the user equipment 120 computes the channel state information from a **pilot channel,** reference signals. This channel state information is sent back to the radio network node 110 such as the base station using a **feedback channel** also called uplink feedback channel. From this channel state information and based on other scheduler inputs, the BS sends a **downlink control channel** where the scheduling information is sent. Once the user equipment 120 decodes this downlink control channel, actual data transfer takes place in a **data traffic channel** between the radio network node 110, such as the base station, and the user equipment 120.

In the following example a bit in a new Information Element (IE) is set to 1 to indicate that the user equipment 120 can use the same codebook subset restriction bitmap in the second cell 115 as that of the first cell 115, and the IE is set to 0 to indicate that the user equipment 120 cannot use the same codebook subset restriction bitmap in the second cell 115 as that of the first cell 115. However, it may be the other way around, that the (IE) is set to 0 to indicates that the user equipment 120 can use the same codebook subset restriction bitmap in the second cell 115 as that of the first cell 115, and the IE is set to 1 to indicate that the user equipment 120 cannot use the same codebook subset restriction bitmap in the second cell 115 as that of the first cell 115.

In some embodiment the radio network node 110 sends a new Information Element (IE) indicating whether or not to use the same codebook subset restriction bitmap in the second cell 115 as that of the previous cell (such as the first cell 115) using higher layer (RRC) signalling. Let the new IE e.g. be called *codebook subset restriction confirmation bit.* Upon receiving the IE, the user equipment 120 decodes this information and interprets if this bit is set to 1 it indicates that the user equipment 120 can use the same codebook subset restriction bitmap in the second cell 115 as that of the first cell 115. Since the user equipment 120 can use the same codebook subset restriction bitmap in the second cell 115 as that of the first cell 115, the user equipment 120 will not report channel state parameters (e.g. CQI, PMI/PCI, RI/NTBP) using the precoding elements which are not set by the codebook subset restriction bitmap. This means that, since the new IE which is sent by the network to the user equipment 120 is set to 1, then the user equipment 120 will understand that the bitmap for code book subset restriction for the (new) second cell 116 is the same as the (old, previous) first cell 115, which mean no need for the user equipment 120 to report the channel quality indication CQI and other parameters PMI, PCI ... so instead of sending the new bit map (when going from one cell to another) only one bit is needed.

Observe that in this case, only one bit is sent instead of sending complete codebook subset restriction bitmap.

In another embodiment, the radio network node 110 sends a new information element with the *codebook subset restriction confirmation bit* set 0 and sends a new codebook subset restriction bitmap. In this case, when the user equipment 120 receives the information element, the user equipment 120 decodes and when it identifies the *codebook subset restriction confirmation* bit is equal to 0 it interprets it to indicate that the user equipment 120 cannot use the same codebook subset restriction bitmap in the second cell 115 as that of the first cell 115. The user equipment 120 erases the previous, i.e. first codebook subset restriction bitmap and sets the codebook subset restriction bitmap according to the new configuration, such as the second codebook subset restriction bitmap. The channel state information parameters may be reported according to the new bitmap it received by the RRC signaling.

In another embodiment, the network sends a new codebook subset restriction bitmap without sending the *codebook subset restriction confirmation bit.* When no *codebook subset restriction confirmation bit* is received, e.g. in an RRC signalling message, it implicitly indicates that the user equipment 120 cannot use the same codebook subset restriction bitmap in the second cell 115 as that of the first cell 115. e.g. The RRC signalling message, may for example be the active set update message, the cell update confirm or any configuration or reconfiguration message. The user equipment 120 will use the received new codebook subset restriction bitmap such as the second codebook subset restriction bitmap in the second cell 116. Note that in these cases the radio network node 110 needs to send the second codebook subset restriction bitmap which is different compared to that of the first codebook subset restriction bitmap.

In another embodiment, the radio network node 110 and the user equipment 120 are configured such that if the radio network node 110 didn't send neither the *codebook subset restriction confirmation bit* nor *the new codebook subset restriction bitmap,* then it is implicitly indicated and understood by the user equipment 120 that it may use the previous (old) configuration, which is the first codebook subset restriction bitmap. This may mean that the indication comprises neither a codebook subset restriction confirmation bit nor a second codebook subset restriction bitmap, which e.g. may be different from the first codebook subset restriction bitmap, i.e. the indication is empty or free of any bit related to codebook subset restriction bitmaps. Thus, this - i.e. that the indication is empty - indicates that the first codebook subset restriction bitmap used in the first cell (115) shall be used in the second cell (116).

### Provided Information Element

**Tables 2 and 3** shows the provided new information element in the RRC signalling that may be part of the active set update message, cell update confirm or any configuration or reconfiguration message. The IE *codebook subset restriction confirmation bit* which is indicated to the user equipment 120 for example as of type Bit string, see table 2. Another way of signalling may be that the *codebook subset restriction confirmation bit* is set as Enumerated (TRUE), where if this IE is present, the user equipment 120 will use codebook subset restriction confirmation bit. The absence of this IE indicates that the codebook subset restriction confirmation bit is not used by the UE, see table 3. Note that the '*codebook subset restriction confirmation bit* is set to optional so that either the radio network node 110 may send this bit or it may not send this bit, so that it has an option to send a new bitmap.

**Table 2: Signalling Proposal 1 for Information element**

| **Information Element/Group name** | **Need** | **Multi** | **Type and reference** | **Semantics description** | **Versi on** |
|---|---|---|---|---|---|
| CHOICE *Configuration info* | MP | | | | REL-11 |
| >Continue | | | (no data) | Used in reconfiguration s without interruption of MIMO mode with four transmit antennas. | REL-11 |
| >New configuration | | | | | REL-11 |
| >>MIMO mode with four transmit antennas N_cqi_typeA/M_cqi ratio | OP | | Enumerated (1/2, 2/3, 3/4, 4/5, 5/6, 6/7, 7/8, 8/9, 9/10, 1/1) | | REL-11 |
| >>MIMO mode with four transmit antennas pilot configuration | OP | | MIMO mode with four transmit antennas pilot configuratio n 10.3.6.41y | | REL-11 |
| >>Precoding weight set restriction | OP | | Bit string (64) | | REL-11 |
| *>>Codebook subset restriction confirmation bit* | OP | | Bit string (1) | | REL-13 |

In the table:
Need relates to - Mandatory Present (MP) and Optional (OP)
Multi - is the type of IE, defined when usually the IE has a range, for example 1 to maximum value.

Type and reference, Enumerated(1/2, 2/3, 3/4, 4/5, 5/6, 6/7, 7/8, 8/9, 9/10, 1/1). The enumerated indicates which N_cqi_typeA/M_cqi ratio is used for MIMO mode with 4TX, for example ½ or 2/3 or ¾. As defined in specification 25.331 - RRC messages may be extended in future versions of this protocol, either by adding values for choices, enumerated and size constrained types or by adding information elements.

**Table 3: Signalling Proposal 2 for Information element**

| **Information Element/Group name** | **Need** | **Multi** | **Type and reference** | **Semantics description** | **Versi on** |
|---|---|---|---|---|---|
| CHOICE *Configuration info* | MP | | | | REL-11 |
| >Continue | | | (no data) | Used in reconfiguration s without interruption of MIMO mode with four transmit antennas. | REL-11 |
| >New configuration | | | | | REL-11 |
| >>MIMO mode with four transmit antennas N_cqi_typeA/M_cqi ratio | OP | | Enumerated (1/2, 2/3, 3/4, 4/5, 5/6, 6/7, 7/8, 8/9, 9/10, 1/1) | | REL-11 |
| >>MIMO mode with four transmit antennas pilot configuration | OP | | MIMO mode with four transmit antennas pilot configuratio n 10.3.6.41y | | REL-11 |
| >>Precoding weight set restriction | OP | | Bit string (64) | | REL-11 |
| *>>Codebook subset restriction confirmation bit* | OP | | Enumerated (TRUE) | If this IE present, the UE start using codebook subset restriction confirmation bit. The absence of this IE indicates that the codebook subset restriction | REL-13 |
| | | | | confirmation bit is not used by the UE. | |

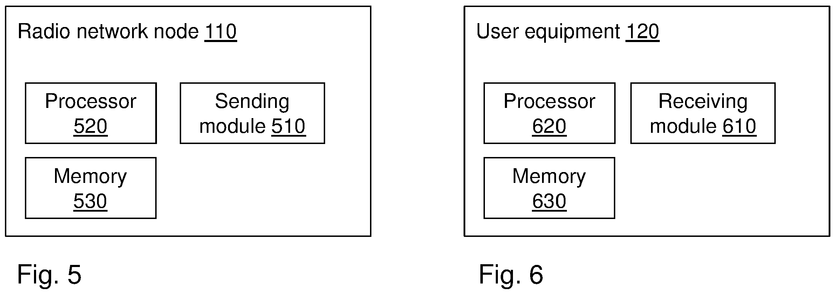

To perform the method actions for assisting in a handover of a user equipment 120 from a first cell 115 to a second cell 116, described above in relation to Figure 2, the radio network node 110 may comprise the following arrangement depicted in **Figure 5****.**

The radio network node 110 is configured to, e.g. by means of a **sending module 510** configured to, send an indication to the user equipment 120, which indication indicates whether or not to use a same first codebook subset restriction bitmap in the second cell 116 as in the first cell 115. In some embodiments, the indication is a bit related to codebook subset restriction bitmaps, such as a single, bit comprised in a message. In some embodiments, the indication is a bit related to codebook subset restriction bitmaps, such as a single bit which is comprised in an Information Element, IE. In some embodiments, the indication comprises that when no bit related to codebook subset restriction bitmaps is comprised in a message, this indicates that the first codebook subset restriction bitmap used in the first cell 115 shall be used in the second cell 116. In some embodiments, the indication comprises a second codebook subset restriction bitmap, which second codebook subset restriction bitmap is different from the codebook subset restriction bitmap used in the first cell 115, which second codebook subset restriction bitmap indicates that the first codebook subset restriction bitmap used in the first cell 115 shall not be used in the second cell 116. In some embodiments, the indication comprises that no second code second codebook subset restriction bitmap being different from the codebook subset restriction bitmap is sent to the user equipment 120, and wherein said indication indicates that the first codebook subset restriction bitmap used in the first cell 115 shall be used in the second cell 116.

The embodiments herein comprising the process of assisting in a handover of a user equipment 120 from a first cell 115 to second cell 116 may be implemented through one or more processors, such as a **processor 520** in the radio network node 110 depicted in Figure 5, together with computer program code for performing the functions and actions of the embodiments herein. The program code mentioned above may also be provided as a computer program product, for instance in the form of a data carrier carrying computer program code for performing the embodiments herein when being loaded into the radio network node 110. One such carrier may be in the form of a CD ROM disc. It is however feasible with other data carriers such as a memory stick. The computer program code may furthermore be provided as pure program code on a server and downloaded to the radio network node 110.

The radio network node 110 may further comprise a **memory 530** comprising one or more memory units. The memory 530 comprises instructions executable by the processor 520. The memory 530 is arranged to be used to store e.g. codebook subset restriction bitmaps, data, configurations, and applications to perform the methods herein when being executed in the first communication radio network node 110.

Those skilled in the art will also appreciate that the sending module 510 described above may refer to a combination of analog and digital circuits, and/or one or more processors configured with software and/or firmware, e.g. stored in the memory 530, that when executed by the one or more processors such as the processor 520 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

To perform the method actions for handling a handover of the user equipment 120 from a first cell 115 to second cell 116, in relation to Figure 3, the user equipment 120 may comprise the following arrangement as depicted in **Figure 6****.** The user equipment 120 is configured to, e.g. by means of a **receiving module 610** configured to receive 301 an indication from a radio network node 110, which indication indicates whether or not to use a same first codebook subset restriction bitmap in the second cell 116 as in the first cell 115. In some embodiments, the indication is a bit related to codebook subset restriction bitmaps, such as a single, bit comprised in a message. In some embodiments, the indication is a bit related to codebook subset restriction bitmaps, such as a single bit which is comprised in an Information Element, IE. In some embodiments, the indication comprises that when no bit related to codebook subset restriction bitmaps is comprised in a message, this indicates that the first codebook subset restriction bitmap used in the first cell 115 shall be used in the second cell 116. In some embodiments, the indication comprises a second codebook subset restriction bitmap, which second codebook subset restriction bitmap is different from the first codebook subset restriction bitmap used in the first cell 115, which second codebook subset restriction bitmap indicates that the first codebook subset restriction bitmap used in the first cell 115 shall not be used in the second cell 116. In some embodiments, the indication comprises that no second code second codebook subset restriction bitmap being different from the codebook subset restriction bitmap is sent to the user equipment 120, and wherein said indication indicates that the first codebook subset restriction bitmap used in the first cell 115 shall be used in the second cell 116.

The embodiments herein comprising the process of handling a handover of the user equipment 120 from a first cell 115 to a second cell 116, may be implemented through one or more processors, such as the **processor 620** in the user equipment 120 depicted in Figure 6, together with computer program code for performing the functions and actions of the embodiments herein. The program code mentioned above may also be provided as a computer program product, for instance in the form of a data carrier carrying computer program code for performing the embodiments herein when being loaded into the user equipment 120. One such carrier may be in the form of a CD ROM disc. It is however feasible with other data carriers such as a memory stick. The computer program code may furthermore be provided as pure program code on a server and downloaded to the user equipment 120.

The the user equipment 120 may further comprise a memory comprising one or more memory units, such as such as the **memory 630** in the user equipment 120 depicted in Figure 6. The memory 630 comprises instructions executable by the processor 620. The memory 630 is arranged to be used to store e.g. codebook subset restriction bitmap, data, configurations, and applications to perform the methods herein when being executed in the user equipment 120.

Those skilled in the art will also appreciate that the modules in the user equipment 120 described above may refer to a combination of analog and digital circuits, and/or one or more processors configured with software and/or firmware, e.g. stored in the the memory 630 in the user equipment 120 that when executed by the one or more processors such as the processor 620 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

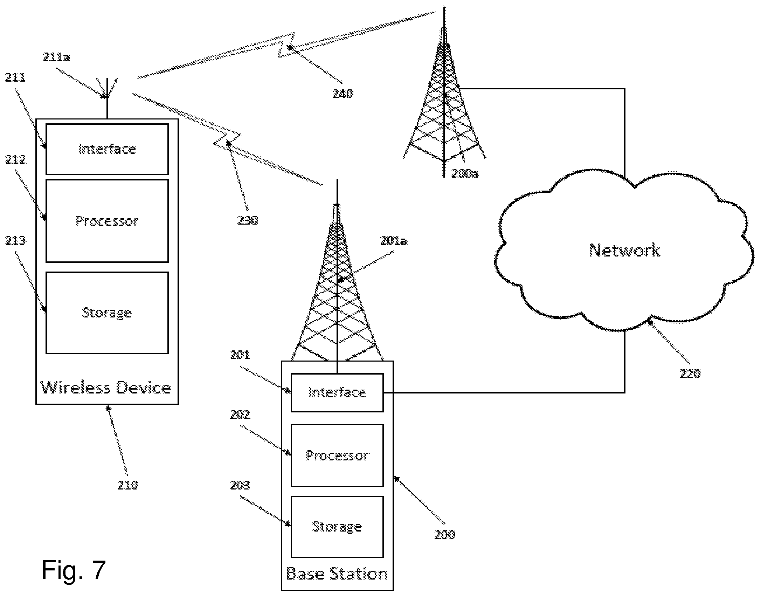

**Figure 7** illustrates a wireless network comprising a more detailed view of a network node 200 and a wireless device (WD) 210, in accordance with a particular embodiment. For simplicity, Figure 7 only depicts network 220, network nodes 200 and 200a, and WD 210. The network node 200, labelled "Base Station" in the Figure, comprises processor 202, storage 203, interface 201, and antenna 201a. Similarly, the WD 210 comprises processor 212, storage 213, interface 211 and antenna 211a. These components may work together in order to provide network node and/or wireless device functionality, such as providing wireless connections in a wireless network and allowing for a change in estimated DownLink Component Carrier (DL CC). In different embodiments, the wireless network may comprise any number of wired or wireless networks, network nodes, base stations, controllers, wireless devices, relay stations, and/or any other components that may facilitate or participate in the communication of data and/or signals whether via wired or wireless connections.

The network 220 may comprise one or more IP networks, public switched telephone networks (PSTNs), packet data networks, optical networks, wide area networks (WANs), local area networks (LANs), WLANs, wired networks, wireless networks, metropolitan area networks, and other networks to enable communication between devices.

The network node 200 comprises a processor 202, a storage 203, an interface 201, and an antenna 201a. These components are depicted as single boxes located within a single larger box. In practice however, a network node may comprises multiple different physical components that make up a single illustrated component, e.g. the interface 201 may comprise terminals for coupling wires for a wired connection and a radio transceiver for a wireless connection. Similarly, the network node 200 may be composed of multiple physically separate components (e.g., a NodeB component and a RNC component, a BTS component and a BSC component, etc.), which may each have their own respective processor, storage, and interface components. In certain scenarios in which the network node 200 comprises multiple separate components, e.g. BTS and BSC components, one or more of the separate components may be shared among several network nodes. For example, a single RNC may control multiple NodeB's. In such a scenario, each unique NodeB and BSC pair, may be a separate network node. In some embodiments, network node 200 may be configured to support multiple radio access technologies (RATs). In such embodiments, some components may be duplicated, e.g. separate storage 203 for the different RATs, and some components may be reused (e.g., the same antenna 201 amay be shared by the RATs).

The processor 202 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other network node 200 components, such as the storage 203, network node 200 functionality. For example, the processor 202 may execute instructions stored in the storage 203. Such functionality may include providing various wireless features discussed herein to a wireless devices, such as the WD 210, including any of the features or benefits disclosed herein.

The storage 203 may comprise any form of volatile or non-volatile computer readable memory including, without limitation, persistent storage, solid state memory, remotely mounted memory, magnetic media, optical media, random access memory (RAM), read-only memory (ROM), removable media, or any other suitable local or remote memory component. The storage 203 may store any suitable instructions, data or information, including software and encoded logic, utilized by the network node 200. The storage 203 may be used to store any calculations made by the processor 202 and/or any data received via the interface 201.

The network node 200 comprises, as mentioned above, the interface 201 which may be used in the wired or wireless communication of signalling and/or data between the network node 200, the network 220, and/or the WD 210. For example, the interface 201 may perform any formatting, coding, or translating that may be needed to allow the network node 200 to send and receive data from the network 220 over a wired connection. The interface 201 may also include a radio transmitter and/or receiver that may be coupled to or a part of the antenna 201a. The radio may receive digital data that is to be sent out to other network nodes or WDs via a wireless connection. The radio may convert the digital data into a radio signal having the appropriate channel and bandwidth parameters. The radio signal may then be transmitted via the antenna 201a to the appropriate recipient (e.g., WD 210).

The antenna 201a may be any type of antenna capable of transmitting and receiving data and/or signals wirelessly. In some embodiments, the antenna 201a may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line.

The WD 210 may be any type of wireless endpoint, mobile station, mobile phone, wireless local loop phone, smartphone, user equipment, desktop computer, PDA, cell phone, tablet, laptop, VoIP phone or handset, which is able to wirelessly send and receive data and/or signals to and from a network node, such as network node 200 and/or other WDs. The WD 210 comprises a processor 212, a storage 213, an interface 211, and an antenna 211a. Like the network node 200, the components of the WD 210 are depicted as single boxes located within a single larger box, however in practice a wireless device may comprises multiple different physical components that make up a single illustrated component (e.g., the storage 213 may comprise multiple discrete microchips, each microchip representing a portion of the total storage capacity).

The processor 212 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in combination with other WD 210 components, such as the storage 213, WD 210 functionality. Such functionality may include providing various wireless features discussed herein, including any of the features or benefits disclosed herein.

The storage 213 may be any form of volatile or non-volatile memory including, without limitation, persistent storage, solid state memory, remotely mounted memory, magnetic media, optical media, random access memory (RAM), read-only memory (ROM), removable media, or any other suitable local or remote memory component. The storage 213 may store any suitable data, instructions, or information, including software and encoded logic, utilized by the WD 210. The storage 213 may be used to store any calculations made by the processor 212 and/or any data received via the interface 211.

The interface 211 may be used in the wireless communication of signalling and/or data between the WD 210 and the network node 200. For example, the interface 211 may perform any formatting, coding, or translating that may be needed to allow the WD 210 to send and receive data from the network node 200 over a wireless connection. The interface 211 may also include a radio transmitter and/or receiver that may be coupled to or a part of the antenna 211a. The radio may receive digital data that is to be sent out to the network node 200 via a wireless connection. The radio may convert the digital data into a radio signal having the appropriate channel and bandwidth parameters. The radio signal may then be transmitted via the antenna 211a to the network node 200.

The antenna 211a may be any type of antenna capable of transmitting and receiving data and/or signals wirelessly. In some embodiments, the antenna 211a may comprise one or more omni-directional, sector or panel antennas operable to transmit/receive radio signals between 2 GHz and 66 GHz. For simplicity, the antenna 211a may be considered a part of the interface 211 to the extent that a wireless signal is being used.

In some embodiments, the components described above may be used to implement one or more functional modules used in handover. The functional modules may comprise software, computer programs, sub-routines, libraries, source code, or any other form of executable instructions that are run by, for example, a processor. In general terms, each functional module may be implemented in hardware and/or in software. Preferably, one or more or all functional modules may be implemented by the processors 212 and/or 202, possibly in cooperation with the storages 213 and/or 203. The processors 212 and/or 202 and storages 213 and/or 203 may thus be arranged to allow the processors 212 and/or 202 to fetch instructions from the storages 213 and/or 203 and execute the fetched instructions to allow the respective functional module to perform any features or functions disclosed herein. The modules may further be configured to perform other functions or steps not explicitly described herein but which would be within the knowledge of a person skilled in the art.

Certain aspects of the inventive concept have mainly been described above with reference to a few embodiments. However, as is readily appreciated by a person skilled in the art, embodiments other than the ones disclosed above are equally possible and within the scope of the inventive concept. Similarly, while a number of different combinations have been discussed, all possible combinations have not been disclosed. One skilled in the art would appreciate that other combinations exist and are within the scope of the inventive concept. Moreover, as is understood by the skilled person, the herein disclosed embodiments are as such applicable also to other standards and communication systems and any feature from a particular figure disclosed in connection with other features may be applicable to any other figure and or combined with different features.

When using the word "comprise" or "comprising" it shall be interpreted as non- limiting, i.e. meaning "consist at least of". Above, the invention has been illustrated with various embodiments. These embodiments are, however, intended only as non-limiting examples, and the scope of protection is instead defined by the appended claims.

## Claims

1. A method, performed by a radio network node (110), for assisting in a handover of a user equipment (120) from a first cell (115) to a second cell (116), the method **characterized in** the steps of :
sending (201) an indication to the user equipment (120), wherein the indication indicates whether or not to use a same first codebook subset restriction bitmap in the second cell (116) as in the first cell (115), wherein
the indication comprises a single bit being related to codebook subset restriction bitmaps,.

2. The method according to claim 1, wherein the indication comprises that when no bit related to codebook subset restriction bitmaps is comprised in a message, wherein this indicates that the first codebook subset restriction bitmap used in the first cell (115) shall be used in the second cell (116).

3. The method according to claim 1, wherein the indication comprises a second codebook subset restriction bitmap, the second codebook subset restriction bitmap being different from the first codebook subset restriction bitmap used in the first cell (115), wherein the second codebook subset restriction bitmap indicates that the first codebook subset restriction bitmap used in the first cell (115) shall not be used in the second cell (116).

4. The method according to claim 1, wherein the indication comprises neither a codebook subset restriction confirmation bit nor a second codebook subset restriction bitmap, wherein this indicates that the first codebook subset restriction bitmap used in the first cell (115) shall be used in the second cell (116).

5. A method, performed by a user equipment (120), for handling a handover of the user equipment (120) from a first cell (115) to a second cell (116), the method comprising:
receiving (301) an indication from a radio network node (110), wherein the indication indicates whether or not to use a same first codebook subset restriction bitmap in the second cell (116) as in the first cell (115), **characterized in** the step of:
the indication comprises a single bit being related to codebook subset restriction bitmaps.

6. The method according to claim 5, wherein the indication comprises that when no bit related to codebook subset restriction bitmaps is comprised in a message, wherein this indicates that the first codebook subset restriction bitmap used in the first cell (115) shall be used in the second cell (116).

7. The method according to claim 5, wherein the indication comprises a second codebook subset restriction bitmap that is different from the first codebook subset restriction bitmap used in the first cell (115), wherein the second codebook subset restriction bitmap indicates that the first codebook subset restriction bitmap used in the first cell (115) shall not be used in the second cell (116).

8. The method according to claim 5, wherein the indication comprises neither a codebook subset restriction confirmation bit nor a second codebook subset restriction bitmap, wherein this indicates that the first codebook subset restriction bitmap used in the first cell (115) shall be used in the second cell (116).

9. A radio network node (110) for assisting in a handover of a user equipment (120) from a first cell (115) to a second cell (116), the radio network node comprises a processor and an interface comprising a radio transmitter and receiver (110) being configured to:
send an indication to the user equipment (120), wherein the indication indicates whether or not to use a same first codebook subset restriction bitmap in the second cell (116) as in the first cell (115), wherein
the indication comprises a single bit being related to codebook subset restriction bitmaps.

10. The radio network node (110) according to claim 9, wherein the indication comprises that when no bit related to codebook subset restriction bitmaps is comprised in a message, wherein this indicates that the first codebook subset restriction bitmap used in the first cell (115) shall be used in the second cell (116).

11. The radio network node (110) according to claim 9, wherein the indication comprises a second codebook subset restriction bitmap that is different from the first codebook subset restriction bitmap used in the first cell (115), wherein the second codebook subset restriction bitmap indicates that the first codebook subset restriction bitmap used in the first cell (115) shall not be used in the second cell (116).

12. The radio network node (110) according to claim 9, wherein the indication comprises neither a codebook subset restriction confirmation bit nor a second codebook subset restriction bitmap, wherein this indicates that the first codebook subset restriction bitmap used in the first cell (115) shall be used in the second cell (116).

13. A user equipment (120) for handling a handover of the user equipment (120) from a first cell (115) to a second cell (116), wherein the user equipment (120) comprises a processor and an interface comprising a radio transmitter and receiver configured to:
receive an indication from a radio network node (110), wherein the indication indicates whether or not to use a same first codebook subset restriction bitmap in the second cell (116) as in the first cell (115), wherein
the indication comprises a single bit being related to codebook subset restriction bitmaps.

14. The user equipment (120) according to claim 13, wherein the indication comprises that when no bit related to codebook subset restriction bitmaps is comprised in a message, wherein this indicates that the first codebook subset restriction bitmap used in the first cell (115) shall be used in the second cell (116).

15. The user equipment (120) according to claim 13, wherein the indication comprises a second codebook subset restriction bitmap that is different than the first codebook subset restriction bitmap used in the first cell (115), wherein the different second codebook subset restriction bitmap indicates that the first codebook subset restriction bitmap used in the first cell (115) shall not be used in the second cell (116).

16. The user equipment (120) according to claim 13, wherein the indication comprises neither a codebook subset restriction confirmation bit nor a second codebook subset restriction bitmap, wherein this indicates that the first codebook subset restriction bitmap used in the first cell (115) shall be used in the second cell (116).

## Patentansprüche

1. Verfahren, durchgeführt durch einen Funknetzknoten (110), zum Unterstützen bei einer Übergabe eines Benutzergeräts (120) von einer ersten Zelle (115) an eine zweite Zelle (116), wobei das Verfahren durch die folgenden Schritte gekennzeichnet ist:
Senden (201) einer Angabe an das Benutzergerät (120), wobei die Angabe angibt, ob eine gleiche erste Codebuch-Untergruppenbeschränkungsbitmap in der zweiten Zelle (116) wie in der ersten Zelle (115) zu verwenden ist oder nicht, wobei
die Angabe ein einzelnes Bit umfasst, das mit Codebuch-Untergruppenbeschränkungsbitmaps in Beziehung steht.

2. Verfahren nach Anspruch 1, wobei die Angabe das umfasst, wenn kein mit Codebuch-Untergruppenbeschränkungsbitmaps in Beziehung stehendes Bit in einer Nachricht umfasst ist, wobei dies anzeigt, dass die erste Codebuch-Untergruppenbeschränkungsbitmap, die in der ersten Zelle (115) verwendet ist, in der zweiten Zelle (116) verwendet werden soll.

3. Verfahren nach Anspruch 1, wobei die Angabe eine zweite Codebuch-Untergruppenbeschränkungsbitmap umfasst, wobei sich die zweite Codebuch-Untergruppenbeschränkungsbitmap von der ersten Codebuch-Untergruppenbeschränkungsbitmap, die in der ersten Zelle (115) verwendet ist, unterscheidet, wobei die zweite Codebuch-Untergruppenbeschränkungsbitmap angibt, dass die erste Codebuch-Untergruppenbeschränkungsbitmap, die in der ersten Zelle (115) verwendet ist, nicht in der zweiten Zelle (116) verwendet werden soll.

4. Verfahren nach Anspruch 1, wobei die Angabe weder ein Codebuch-Untergruppenbeschränkungsbestätigungsbit noch eine zweite Codebuch-Untergruppenbeschränkungsbitmap umfasst, wobei dies anzeigt, dass die erste Codebuch-Untergruppenbeschränkungsbitmap, die in der ersten Zelle (115) verwendet ist, in der zweiten Zelle (116) verwendet werden soll.

5. Verfahren, durchgeführt durch ein Benutzergerät (120) zum Handhaben einer Übergabe des Benutzergeräts (120) von einer ersten Zelle (115) an eine zweite Zelle (116), wobei das Verfahren Folgendes umfasst:
Empfangen (301) einer Angabe von einem Funknetzknoten (110), wobei die Angabe angibt, ob eine gleiche erste Codebuch-Untergruppenbeschränkungsbitmap in der zweiten Zelle (116) wie in der ersten Zelle (115) zu verwenden ist oder nicht, **gekennzeichnet durch** den folgenden Schritt:
die Angabe umfasst ein einzelnes Bit, das mit Codebuch-Untergruppenbeschränkungsbitmaps in Beziehung steht.

6. Verfahren nach Anspruch 5, wobei die Angabe das umfasst, wenn kein mit Codebuch-Untergruppenbeschränkungsbitmaps in Beziehung stehendes Bit in einer Nachricht umfasst ist, wobei dies anzeigt, dass die erste Codebuch-Untergruppenbeschränkungsbitmap, die in der ersten Zelle (115) verwendet ist, in der zweiten Zelle (116) verwendet werden soll.

7. Verfahren nach Anspruch 5, wobei die Angabe eine zweite Codebuch-Untergruppenbeschränkungsbitmap umfasst, die sich von der ersten Codebuch-Untergruppenbeschränkungsbitmap, die in der ersten Zelle (115) verwendet ist, unterscheidet, wobei die zweite Codebuch-Untergruppenbeschränkungsbitmap angibt, dass die erste Codebuch-Untergruppenbeschränkungsbitmap, die in der ersten Zelle (115) verwendet ist, nicht in der zweiten Zelle (116) verwendet werden soll.

8. Verfahren nach Anspruch 5, wobei die Angabe weder ein Codebuch-Untergruppenbeschränkungsbestätigungsbit noch eine zweite Codebuch-Untergruppenbeschränkungsbitmap umfasst, wobei dies anzeigt, dass die erste Codebuch-Untergruppenbeschränkungsbitmap, die in der ersten Zelle (115) verwendet ist, in der zweiten Zelle (116) verwendet werden soll.

9. Funknetzknoten (110) zum Unterstützen bei einer Übergabe eines Benutzergeräts (120) von einer ersten Zelle (115) an eine zweite Zelle (116), wobei der Funknetzknoten einen Prozessor und eine Schnittstelle umfasst, die einen Funksender und -empfänger (110) umfasst, der für Folgendes konfiguriert ist:
eine Angabe an das Benutzergerät (120) zu senden, wobei die Angabe angibt, ob eine gleiche erste Codebuch-Untergruppenbeschränkungsbitmap in der zweiten Zelle (116) wie in der ersten Zelle (115) zu verwenden ist oder nicht, wobei
die Angabe ein einzelnes Bit umfasst, das mit Codebuch-Untergruppenbeschränkungsbitmaps in Beziehung steht.

10. Funknetzknoten (110) nach Anspruch 9, wobei die Angabe das umfasst, wenn kein mit Codebuch-Untergruppenbeschränkungsbitmaps in Beziehung stehendes Bit in einer Nachricht umfasst ist, wobei dies anzeigt, dass die erste Codebuch-Untergruppenbeschränkungsbitmap, die in der ersten Zelle (115) verwendet ist, in der zweiten Zelle (116) verwendet werden soll.

11. Funknetzknoten (110) nach Anspruch 9, wobei die Angabe eine zweite Codebuch-Untergruppenbeschränkungsbitmap umfasst, die sich von der ersten Codebuch-Untergruppenbeschränkungsbitmap, die in der ersten Zelle (115) verwendet ist, unterscheidet, wobei die zweite Codebuch-Untergruppenbeschränkungsbitmap angibt, dass die erste Codebuch-Untergruppenbeschränkungsbitmap, die in der ersten Zelle (115) verwendet ist, nicht in der zweiten Zelle (116) verwendet werden soll.

12. Funknetzknoten (110) nach Anspruch 9, wobei die Angabe weder ein Codebuch-Untergruppenbeschränkungsbestätigungsbit noch eine zweite Codebuch-Untergruppenbeschränkungsbitmap umfasst, wobei dies anzeigt, dass die erste Codebuch-Untergruppenbeschränkungsbitmap, die in der ersten Zelle (115) verwendet ist, in der zweiten Zelle (116) verwendet werden soll.

13. Benutzergerät (120) zum Handhaben bei einer Übergabe des Benutzergeräts (120) von einer ersten Zelle (115) an eine zweite Zelle (116), wobei das Benutzergerät (120) einen Prozessor und eine Schnittstelle umfasst, die einen Funksender und -empfänger umfasst, der für Folgendes konfiguriert ist:
eine Angabe von einem Funknetzknoten (110) zu empfangen, wobei die Angabe angibt, ob eine gleiche erste Codebuch-Untergruppenbeschränkungsbitmap in der zweiten Zelle (116) wie in der ersten Zelle (115) zu verwenden ist oder nicht, wobei
die Angabe ein einzelnes Bit umfasst, das mit Codebuch-Untergruppenbeschränkungsbitmaps in Beziehung steht.

14. Benutzergerät (120) nach Anspruch 13, wobei die Angabe das umfasst, wenn kein mit Codebuch-Untergruppenbeschränkungsbitmaps in Beziehung stehendes Bit in einer Nachricht umfasst ist, wobei dies anzeigt, dass die erste Codebuch-Untergruppenbeschränkungsbitmap, die in der ersten Zelle (115) verwendet ist, in der zweiten Zelle (116) verwendet werden soll.

15. Benutzergerät (120) nach Anspruch 13, wobei die Angabe eine zweite Codebuch-Untergruppenbeschränkungsbitmap umfasst, die sich von der ersten Codebuch-Untergruppenbeschränkungsbitmap, die in der ersten Zelle (115) verwendet ist, unterscheidet, wobei die unterschiedliche zweite Codebuch-Untergruppenbeschränkungsbitmap angibt, dass die erste Codebuch-Untergruppenbeschränkungsbitmap, die in der ersten Zelle (115) verwendet ist, nicht in der zweiten Zelle (116) verwendet werden soll.

16. Benutzergerät (120) nach Anspruch 13, wobei die Angabe weder ein Codebuch-Untergruppenbeschränkungsbestätigungsbit noch eine zweite Codebuch-Untergruppenbeschränkungsbitmap umfasst, wobei dies anzeigt, dass die erste Codebuch-Untergruppenbeschränkungsbitmap, die in der ersten Zelle (115) verwendet ist, in der zweiten Zelle (116) verwendet werden soll.

## Revendications

1. Procédé, mis en oeuvre par un noeud de réseau radio (110), permettant d'aider au transfert de communication d'un équipement utilisateur (120) depuis une première cellule (115) jusqu'à une seconde cellule (116), le procédé étant **caractérisé par** les étapes consistant à :
envoyer (201) une indication à l'équipement utilisateur (120), dans lequel l'indication indique si oui ou non utiliser une même première table binaire de restriction de sous-ensemble de livre de codes dans la seconde cellule (116) que dans la première cellule (115), dans lequel
l'indication comprend un seul bit qui est lié à des tables de bits de restriction de sous-ensemble de livre de codes.

2. Procédé selon la revendication 1, dans lequel l'indication comprend que lorsque aucun bit lié à des tables binaires de restriction de sous-ensemble de livre de codes n'est compris dans un message, dans lequel cela indique que la première table de bits de restriction de sous-ensemble de livre de codes utilisée dans la première cellule (115) doit être utilisée dans la seconde cellule (116).

3. Procédé selon la revendication 1, dans lequel l'indication comprend une seconde table de bits de restriction de sous-ensemble de livre de codes, la seconde table de bits de restriction de sous-ensemble de livre de codes étant différente de la première table de bits de restriction de sous-ensemble de livre de codes utilisée dans la première cellule (115), dans lequel la seconde table de bits de restriction de sous-ensemble de livre de codes indique que la première table de bits de restriction de sous-ensemble de livre de codes utilisée dans la première cellule (115) ne doit pas être utilisée dans la seconde cellule (116).

4. Procédé selon la revendication 1, dans lequel l'indication ne comprend ni un bit de confirmation de restriction de sous-ensemble de livre de codes ni une seconde table de bits de restriction de sous-ensemble de livre de codes, dans lequel cela indique que la première table de bits de restriction de sous-ensemble de livre de codes utilisée dans la première cellule (115) doit être utilisée dans la seconde cellule (116).

5. Procédé, mis en oeuvre par un équipement utilisateur (120), permettant de gérer un transfert de communication de l'équipement utilisateur (120) depuis une première cellule (115) jusqu'à une seconde cellule (116), le procédé comprenant :
la réception (301) d'une indication provenant d'un noeud de réseau radio (110), dans lequel l'indication indique si oui ou non utiliser une même première table de bits de restriction de sous-ensemble de livre de codes dans la seconde cellule (116) que dans la première cellule (115), **caractérisé par** l'étape consistant à :
l'indication comprend un seul bit qui est lié à des tables de bits de restriction de sous-ensemble de livre de codes.

6. Procédé selon la revendication 5, dans lequel l'indication comprend que lorsque aucun bit lié à des tables de bits de restriction de sous-ensemble de livre de codes n'est compris dans un message, dans lequel cela indique que la première table de bits de restriction de sous-ensemble de livre de codes utilisée dans la première cellule (115) doit être utilisée dans la seconde cellule (116).

7. Procédé selon la revendication 5, dans lequel l'indication comprend une seconde table de bits de restriction de sous-ensemble de livre de codes qui est différente de la première table de bits de restriction de sous-ensemble de livre de codes utilisée dans la première cellule (115), dans lequel la seconde table de bits de restriction de sous-ensemble de livre de codes indique que la première table de bits de restriction de sous-ensemble de livre de codes utilisée dans la première cellule (115) ne doit pas être utilisée dans la seconde cellule (116).

8. Procédé selon la revendication 5, dans lequel l'indication ne comprend ni un bit de confirmation de restriction de sous-ensemble de livre de codes ni une seconde table de bits de restriction de sous-ensemble de livre de codes, dans lequel cela indique que la première table de bits de restriction de sous-ensemble de livre de codes utilisée dans la première cellule (115) doit être utilisée dans la seconde cellule (116).

9. Noeud de réseau radio (110) permettant d'aider au transfert de communication d'un équipement utilisateur (120) depuis une première cellule (115) jusqu'à une seconde cellule (116), le noeud de réseau radio comprend un processeur et une interface comprenant un émetteur-récepteur radio (110) qui est configuré pour :
envoyer une indication à l'équipement utilisateur (120), dans lequel l'indication indique si oui ou non utiliser une même première table de bits de restriction de sous-ensemble de livre de codes dans la seconde cellule (116) que dans la première cellule (115), dans lequel
l'indication comprend un seul bit qui est lié à des tables de bits de restriction de sous-ensemble de livre de codes.

10. Noeud de réseau radio (110) selon la revendication 9, dans lequel l'indication comprend que lorsque aucun bit lié à des tables de bits de restriction de sous-ensemble de livre de codes n'est compris dans un message, dans lequel cela indique que la première table de bits de restriction de sous-ensemble de livre de codes utilisée dans la première cellule (115) doit être utilisée dans la seconde cellule (116).

11. Noeud de réseau radio (110) selon la revendication 9, dans lequel l'indication comprend une seconde table de bits de restriction de sous-ensemble de livre de codes qui est différente de la première table de bits de restriction de sous-ensemble de livre de codes utilisée dans la première cellule (115), dans lequel la seconde table de bits de restriction de sous-ensemble de livre de codes indique que la première table de bits de restriction de sous-ensemble de livre de codes utilisée dans la première cellule (115) ne doit pas être utilisée dans la seconde cellule (116).

12. Noeud de réseau radio (110) selon la revendication 9, dans lequel l'indication ne comprend ni un bit de confirmation de restriction de sous-ensemble de livre de codes ni une seconde table de bits de restriction de sous-ensemble de livre de codes, dans lequel cela indique que la première table de bits de restriction de sous-ensemble de livre de codes utilisée dans la première cellule (115) doit être utilisée dans la seconde cellule (116).

13. Équipement utilisateur (120) permettant de gérer un transfert de communication de l'équipement utilisateur (120) depuis une première cellule (115) jusqu'à une seconde cellule (116), dans lequel l'équipement utilisateur (120) comprend un processeur et une interface comprenant un émetteur-récepteur radio configuré pour :
recevoir une indication provenant d'un noeud de réseau radio (110), dans lequel l'indication indique si oui ou non utiliser une même première table de bits de restriction de sous-ensemble de livre de codes dans la seconde cellule (116) que dans la première cellule (115), dans lequel
l'indication comprend un seul bit qui est lié à des tables de bits de restriction de sous-ensemble de livre de codes.

14. Équipement utilisateur (120) selon la revendication 13, dans lequel l'indication comprend que lorsque aucun bit lié à des tables de bits de restriction de sous-ensemble de livre de codes n'est compris dans un message, dans lequel cela indique que la première table de bits de restriction de sous-ensemble de livre de codes utilisée dans la première cellule (115) doit être utilisée dans la seconde cellule (116).

15. Équipement utilisateur (120) selon la revendication 13, dans lequel l'indication comprend une seconde table de bits de restriction de sous-ensemble de livre de codes qui est différente de la première table de bits de restriction de sous-ensemble de livre de codes utilisée dans la première cellule (115), dans lequel la seconde table de bits de restriction de sous-ensemble de livre de codes différente indique que la première table de bits de restriction de sous-ensemble de livre de codes utilisée dans la première cellule (115) ne doit pas être utilisée dans la seconde cellule (116).

16. Équipement utilisateur (120) selon la revendication 13, dans lequel l'indication ne comprend ni un bit de confirmation de restriction de sous-ensemble de livre de codes ni une seconde table de bits de restriction de sous-ensemble de livre de codes, dans lequel cela indique que la première table de bits de restriction de sous-ensemble de livre de codes utilisée dans la première cellule (115) doit être utilisée dans la seconde cellule (116).
